# EUROPÄISCHE PATENTSCHRIFT

(11) **EP 0 542 176 B1**
(45) Veröffentlichungstag und Bekanntmachung des Hinweises auf die Patenterteilung: **05.03.1997**
(21) Anmeldenummer: 92119156.5
(22) Anmeldetag: 09.11.1992
(51) Int. Cl.: G11B 11/10

(54) **Magnetooptisches Aufzeichnungsmedium**
Magneto-optical recording medium
Milieu d'enregistrement magnéto-optique

(30) Priorität: 14.11.1991 DE 4137427
(43) Veröffentlichungstag der Anmeldung: 19.05.1993
(73) Patentinhaber: HOECHST AKTIENGESELLSCHAFT, 65926 Frankfurt am Main (DE)
(72) Erfinder: Brekner, Michael-Joachim, Dr. Dipl.-Chem., W-6000 Frankfurt 71 (DE); Hellstern, Egon, Dr. Dipl.-Phys., W-6273 Waldems-Niederems (DE); Weber, Christoph, Dr. Dipl.-Phys., W-6072 Dreieich (DE)

(56) Entgegenhaltungen:
- EP-A- 0 156 464
- EP-A- 0 407 870
- EP-A- 0 454 079

## Beschreibung

Die Erfindung betrifft ein magnetooptisches Aufzeichnungsmedium aus zumindest vier Lagen, die auf einem Substrat übereinander aufgeschichtet sind, und zwei dielektrische Schichten, eine Reflexions- und eine magnetooptische Aufzeichnungsschicht umfassen.

Bekannte amorphe magnetooptische Aufzeichnungsschichten haben im allgemeinen eine uniaxiale senkrechte Anisotropie. Am meisten verbreitet sind Legierungen von Seltenerdmetallen, wie Gadolinium, Terbium, Dysprosium, mit Übergangsmetallen, wie Eisen und Kobalt, denen gegebenenfalls noch weitere Komponenten zugesetzt sind. Die magnetischen Eigenschaften dieser Legierungen hängen sehr stark von ihrer Zusammensetzung ab.

In der DE-OS 33 09 483 sind magnetooptische Aufzeichnungsmaterialien aus amorphen ternären Legierungen auf der Basis von Terbium, Eisen und Kobalt beschrieben, die für Kobaltanteile ≦ 40 % einen näherungsweise linearen Zusammenhang des Winkels der Kerr-Drehung und der Curie-Temperatur mit dem Kobaltgehalt der Legierungen zeigen. Das gleiche gilt für die magnetooptischen Aufzeichnungsmedien, die in der DE-OS 35 36 210 und der Zeitschrift "Journal of Applied Physics", 64 (1988), S. 262, beschrieben sind. So ist aus der DE-OS 35 36 210 ein magnetooptisches Aufzeichnungsmedium aus einem amorphen Film der Zusammensetzung Seltenerd-Übergangsmetalle mit einer Kompensationstemperatur von 50 bis 200 °C oder einer solchen von 0 °C oder weniger bekannt. Bei Verwendung eines amorphen Films des Tb-Fe-Co-Systems wird die Kompensationstemperatur von 50 bis 200 °C durch eine Zusammensetzung mit 24 bis 30 Atomprozent Terbium, 7 bis 20 Atomprozent Kobalt, Rest Eisen, erreicht, während eine Kompensationstemperatur von 0 °C oder weniger durch eine Zusammensetzung mit 18 bis 21,5 Atomprozent Terbium, 8 bis 10 Atomprozent Kobalt und dem Rest Eisen erzielt wird. Diese Zusammenhänge sind in der Offenlegungsschrift DE 35 36 210 ausführlich erläutert.

In den Zeitschriften "Journal of Applied Physics", 61 (1987), ab Seite 2610, und "J. Vac. Sci. Technol. A5 (1987), ab Seite 1949 wird darauf hingewiesen, daß beispielsweise die Erhöhung des Terbiumgehaltes um 1 Atomprozent die Kompensationstempertur bis zu 40 °C verschieben kann.

Die Kontrolle der Zusammensetzung der Schicht ist daher sehr wichtig für die Auslegung des Sputtervorgangs und einer entsprechenden Produktionsanlage, wie aus der Zeitschrift "Solid State Technology", März 1988, S. 107, hervorgeht.

Im allgemeinen wird angegeben, daß die Abweichung der Tb-Konzentration von der mittleren Konzentration im Schichtvolumen weniger als 0,5 % betragen soll.

Die angestrebte Gleichmäßigkeit der Zusammensetzung der Legierungsbestandteile im Tiefenprofil einer magnetooptischen Aufzeichnungsschicht sowie die Bemühungen, die Legierungszusammensetzung über die Beschichtungsbreite und -länge konstant zu halten, erfordern einen großen Aufwand, z.B. rotieren die zu beschichtenden Platten während des Beschichtungsvorgangs um ihre eigene Drehachse und laufen gleichzeitig auf einem größeren Kreis um.

Ein weiterer Nachteil bekannter magnetooptischer Aufzeichnungsmaterialien ist ihre große Korrosionsanfälligkeit.

Zur Vermeidung bzw. Verhinderung dieses Nachteils wird der Zusatz verschiedener korrosionsverhindernder Elemente zu den magnetooptischen Legierungen empfohlen (GB-A - 2.175.160 und EP-A1 - 0 229 292). Der Zusatz derartiger Elemente zum Gesamtvolumen der magnetooptichen Aufzeichnungsschicht verbessert die Korrosionsbeständigkeit, jedoch zu Lasten anderer erwünschter Eigenschaften, wie die eines möglichst großen Kerr-Winkels, einer hohen Koerzitivfeldstärke, hoher Schreibempfindlichkeit, großen Signal-zu-Rausch-Verhältnisses und dergleichen. Bei dem magnetooptischen Aufzeichnungsmedium gemäß der EP-A1 - 0 229 292 werden zu einem ersten Element weitere korrosionsverhindernde Elemente zugesetzt, um eine Anreicherung der korrosionsverhindernden Elemente an der Oberfläche des Aufzeichnungsmediums zu erreichen. Dabei ist nachteilig, daß durch den Zusatz weiterer Elemente die erwünschten magnetooptischen Eigenschaften noch stärker beeinträchtigt werden können.

In der US-PS 4,740,430 sind dünne Barriereschichten aus korrosionsverhindernden Elementen beschrieben. Dabei handelt es sich um eine diskrete, mehrlagige Struktur des magnetooptischen Aufzeichnungsmediums.

Um eine hohe Speicherdichte der magnetooptischen Aufzeichnungsmaterialien zu erreichen, müssen stabile, möglichst kleine Domänen in der magnetooptischen Aufzeichnungsschicht erzeugt werden können. Voraussetzung hierfür ist es, daß das Produkt aus Sättigungsmagnetisierung M_{S} und Koerzitivfeldstärke H_{c} möglichst groß ist (Kryder et al., SPIE Proc. 420, S. 236 (1983)). Für bekannte magnetooptische Aufzeichnungsmaterialien wird ein möglichst großes Produkt aus Sättigungsmagnetisierung und Koerzitivfeldstärke nur in einem engen Temperaturbereich um die Kompensationstemperatur T_{comp} erreicht.

In neuerer Zeit wurden magnetooptische Aufzeichnungsmaterialien beschrieben, die sich für das direkte Überschreiben der Information eignen (US-PS 4,694,358, US-PS 4,649,519, EP-A2 - 0 225 141, EP-A2 - 0 227 480 und EP-A2 - 0 217 096). In allen Fällen wird ein Aufbau des magnetooptischen Aufzeichnungsmediums verwendet, bei dem zwei getrennte Schichten mit unterschiedlichen magnetischen Eigenschaften übereinander geschichtet sind.

In den Druckschriften EP-A2 - 0 217 096 und EP-A2 - 0 227 480 sind magnetooptische Aufzeichnungsmedien beschrieben, bei denen eine thermisch isolierende Zwischenschicht zwischen der magnetooptischen Aufzeichnungsschicht und einer magnetischen Schicht, die ein Vormagnetisierungsfeld erzeugt, im Aufbau vorhanden ist. In den übrigen, voranstehend erwähnten Literturstellen werden solche Zwischenschichten empfohlen, da es anderenfalls zur Diffusion von Legierungskomponenten in die Magnetschicht kommen kann. Eine derartige Diffusion von Legierungskomponenten ändert selbstverständlich die Eigenschaften des magnetooptischen Aufzeichnungsmediums.

Ein anderer Weg der Erhöhung der Langzeitstabilität eines magnetooptischen Speichers wird in dem Verfahren gemäß der DE-OS 36 42 161 vorgeschlagen, bei dem während und/oder nach der Abscheidung einer dielektrischen Schicht, einer magnetooptischen Schicht sowie einer Deckschicht nacheinander auf einem Substrat in nahezu trockener Atmosphäre in einem Temperaturbereich von Raumtempertur bis knapp unterhalb der Kristallisationstemperatur der magnetooptischen Schicht getempert wird.

Im Zusammenhang mit der Wiedergabegenauigkeit der aufgezeichneten Information und der Langzeitstabilität von magnetooptischen Aufzeichnungsmedien hat sich herausgestellt, daß den im allgemeinen verwendeten Kunststoffsubstraten aus Polycarbonat, Polymethylmethacrylat, Epoxyharz, Polysulfon, Polyethersulfon, Polyetherimid und dergl. Materialien eine besondere Bedeutung zukommt, da beispielsweise die thermische Formstabilität und die Doppelbrechung solcher Substratmaterialien die Wiedergabegenauigkeit der Information und die Feuchtigkeitsaufnahme dieser Materialien die Korrosionseigenschaften und somit die Langzeitstabilität der physikalischen Eigenschaften der Aufzeichnungsschichten wesentlich beeinflussen.

Die Substratmaterialien aus bekannten Kunststoffen besitzen eine inhärente Doppelbrechung, d.h. eine Anisotropie der molekularen Polarisierbarkeit, die beispielsweise durch die in eine bestimmte Richtung des Substratmaterials orientierten Kunststoffketten verursacht wird. Zwei kohärente linear polarisierte Lichtwellen, deren elektrische Vektoren in zueinander senkrecht orientierten Richtungen ein Substratmaterial bzw. eine Substratplatte durchstrahlen, werden aufgrund der unterschiedlichen Polarisierbarkeit der Moleküle unterschiedlich stark gebrochen, wodurch es zu einer Phasenverschiebung der Wellen kommt. Der Betrag der Phasendifferenz ist durch die Weglänge der Wellen durch die Platte und die Differenz der beiden unterschiedlichen Brechungsindices bestimmt. Die Doppelbrechung selbst als Maß der Anisotropie der molekularen Polarisierbarkeit ist durch die Differenz der beiden Brechungsindices gegeben. Aufgrund der Orientierungszustände von solchen Kunststoffketten in dem Substratmaterial kann die Doppelbrechung in verschiedene Raumrichtungen unterschiedliche Werte annehmen.

Das in der EP-A - 0 454 079 beschriebene Substratmaterial besteht aus statistischen Cycloolefin-Copolymeren. Die Polymere werden nach Verfahren hergestellt, die in einer Reihe von Japanischen Patentschriften offenbart sind. Dokument EP-A-0 156 464, das zu zwei von dieser Patentschriften verwandt ist, offenbart ein Verfahren zur Herstellung von statistischen Cycloofelin-Copolymeren, in denen gelöste Monomere in Anwesenheit von Vanadium und Aluminium Katalysatoren polymerisiert werden.

Aus der EP-A - 0 310 680 ist ein Aufzeichnungsmedium mit einem Substrat aus einem amorphen Ethylentetracyclododecencopolymer bekannt, das eine magnetooptische Aufzeichnungsschicht aus einer quaternären amorphen Seltenerd-Übergangsmetall-Legierung aus Tb, Fe, Co mit Pt oder Pd als weitere Legierungskomponente trägt. Des weiteren sind aus diesem Dokument auch Fünf-Komponenten-Legierungen aus Pd Nd Dy Fe Co, Pd Tb Gd Fe Co als magnetooptische Aufzeichnungsschichten bekannt.

Aus der EP-A - 0 387 016 ist aus Beispiel 4 eine magnetooptische Aufzeichnungsschicht aus Te₅₀Ge₄₀Cr₁₀ bekannt, die auf ein Substrat aus einem amorphen Copolymer von Ethylen mit 1,4,5,8-Dimethano-1,2,3,4,4a.5.8.8a-Octahydronaphthalen, abgekürzt DMON, aufgesputtert ist. Weitere bekannte Materialien für Substrate sind Polymerlegierungen von Polycarbonat und Polystyrol und Cykloolefinpolymere, wie sie in dem US-PS 4,614,778 und in der EP-A - 0 387 018, Spalte 5, Zeilen 5 bis 24 beschrieben sind.

Aufgabe der Erfindung ist es, ein mehrlagiges Aufzeichnungsmedium für die Aufzeichnung und Wiedergabe von Daten so zu verbessern, daß die thermische Formstabilität, die Hydrolysebeständigkeit erhöht, sowie die Feuchtigkeitsaufnahme und die Doppelbrechung des Substratmaterials verringert werden.

Diese Aufgabe wird erfindungsgemäß durch ein magnetooptisches Aufzeichnungsmedium der eingangs beschriebenen Art in der Weise gelöst, daß das Substrat aus Polymeren von polycyclischen Olefinen durch Massepolymerisation mit Hilfe eines Metallocenkatalysators ohne Ringöffnung von mindestens einem Monomeren der Formel I, II, III, IV, V oder VI gebildet ist, 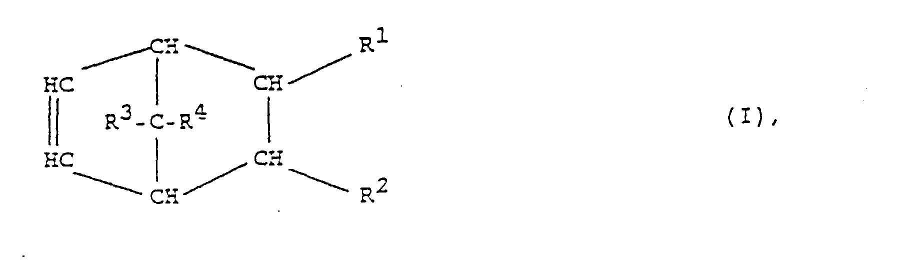 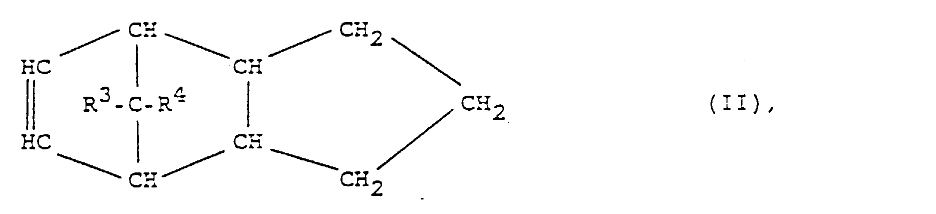 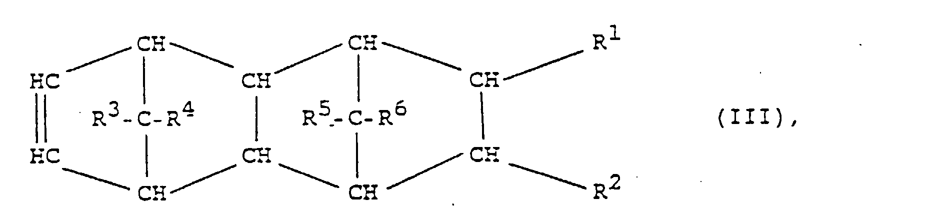 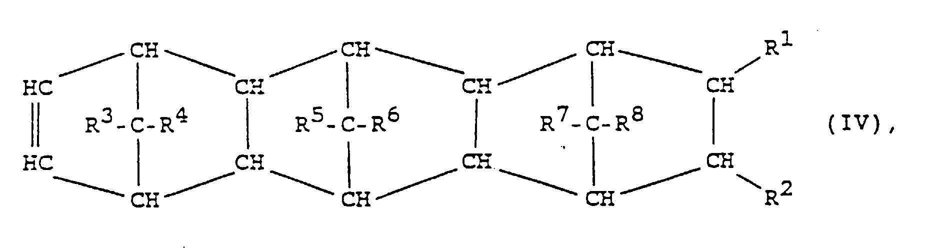 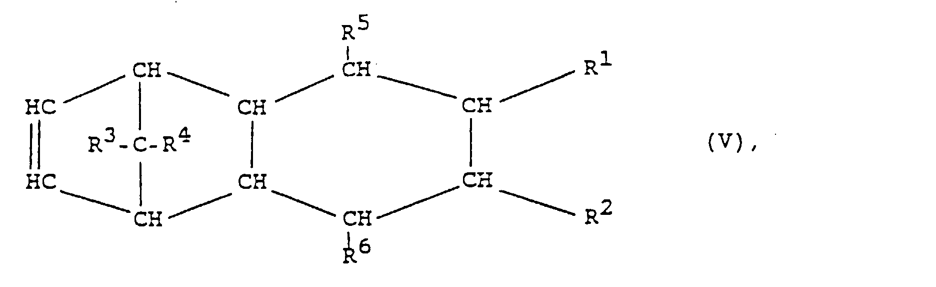 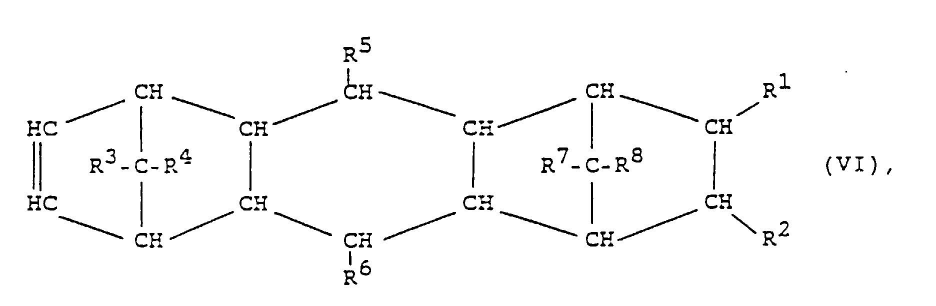 worin R¹, R², R³, R⁴, R⁵, R⁶, R⁷ und R⁸ gleich oder verschieden sind und ein Wasserstoffatom oder einen C₁-C₈-Alkylrest bedeuten, wobei gleiche Reste in den verschiedenen Formeln eine unterschiedliche Bedeutung haben können.

Die Weiterbildung des Substrats ergibt sich aus den Merkmalen der Patentansprüche 2 bis 5. Insbesondere besteht das Substrat aus einem Norbornen-Ethylen- oder Tetracyclododecen-Ethylen-Copolymer, desweiteren kann das Substrat ein Copolymer aus Norbornen und Ethylen sein und eine thermische Formbeständigkeit für einen Bereich der Glastemperatur von 140 °C bis 200 °C aufweisen.

In Ausgestaltung der Erfindung besteht die magnetooptische Aufzeichnungsschicht des Aufzeichnungsmediums aus einer amorphen Seltenerd-Übergangsmetallegierung mit den Übergangsmetallen Fe und Co und zumindest einem Seltenerdmetall aus der Gruppe Gd, Tb, Dy, weist die Aufzeichnungsschicht eine leicht zu magnetisierende Achse senkrecht zur Oberfläche und eine Dicke zwischen 18 und 30 nm auf und ist zumindest ein weiteres Element aus der Gruppe Pt, Se, Cr Bestandteil der Legierung. Zweckmäßigerweise beträgt die Dicke der magnetooptischen Aufzeichnungsschicht 23 bis 28 nm.

Die weitere Ausgestaltung der Erfindung ergibt sich aus den Merkmalen der Patentansprüche 9 bis 26.

Die Erfindung wird im folgenden anhand eines zeichnerisch dargestellten Ausführungsbeispiels, das schematisch einen Schnitt durch ein Aufzeichnungsmedium nach der Erfindung zeigt, näher erläutert.

Eine Speicherplatte 9 besteht aus einem Aufzeichnungsmedium 8, das von beiden Seiten mit je einer zusätzlichen Lackschicht 1 und 7 versehen ist. Die beiden Lackschichten werden mit Hilfe ultravioletter Strahlung gehärtet. Die Lackschicht 1 auf der das Laserlicht durchlassenden Grundfläche des Aufzeichnungsmediums 8 gilt insbesondere der Erhöhung der Kratzfestigkeit und reduziert die Anlagerung von Staub auf der Vorderseite der Speicherplatte 9 während des Plattenbetriebs, woraus eine höhere Zuverlässigkeit der Wiedergabe der Daten von dem Aufzeichnungsmedium 8 resultiert. Die Lackschicht 7 dient vor allem dem mechanischen Schutz des Aufzeichnungsmediums 8. Das magnetooptische Aufzeichnungsmedium 8 umfaßt zumindest eine Vierlagenstruktur, die auf einem Substrat 2 in Plattenform aufgeschichtet ist. Die Vierlagenstruktur auf dem Substrat 2 besteht beispielsweise aus einer dielektrischen Schicht 3, einer magnetooptischen Aufzeichnungsschicht 4, einer weiteren dielektrischen Schicht 5 und einer Reflexionsschicht 6. Ebenso ist es möglich, daß die Reflexionsschicht 6 und die obere dielektrische Schicht 5 vertauscht sind, so daß die Reflexionsschicht 6 unmittelbar auf der magnetooptischen Aufzeichnungsschicht 4 aufliegt. Das Substrat 2 besteht aus einem oder einer Mischung von Polymeren von polycyclischen Olefinen, gebildet durch Polymerisation ohne Ringöffnung von mindestens einem Monomeren der Formeln I, II, III, IV, V oder VI, 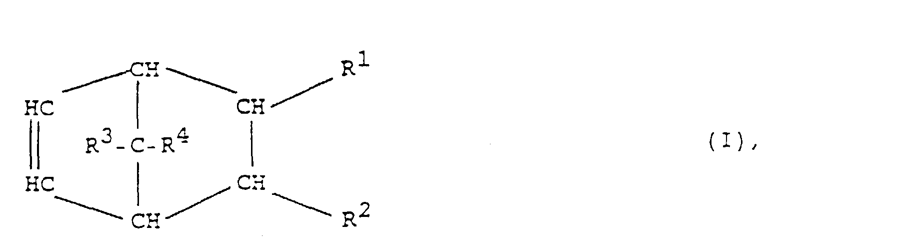 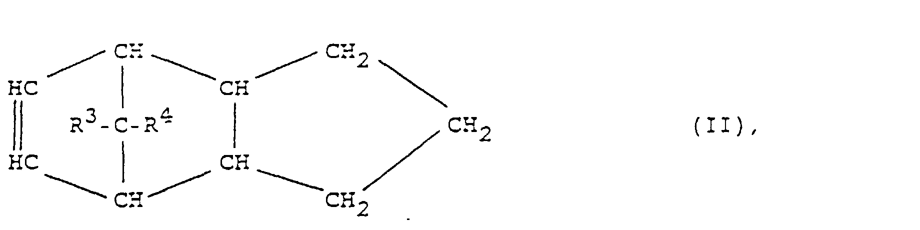 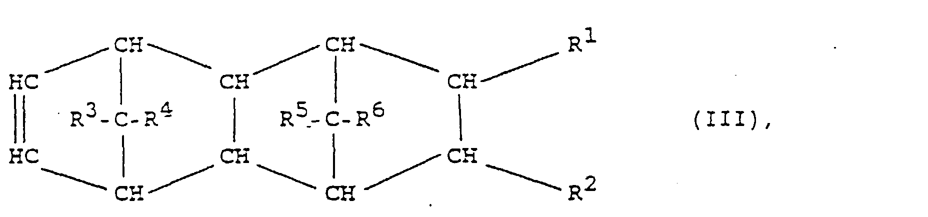 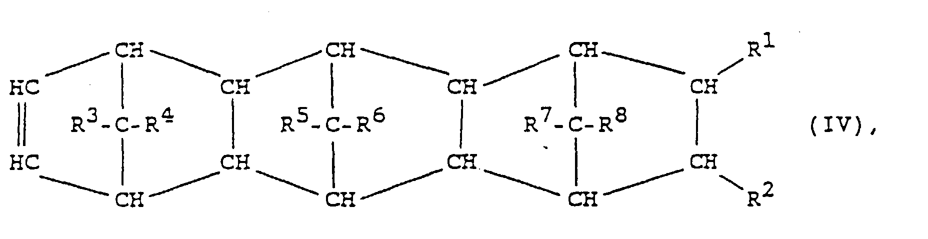 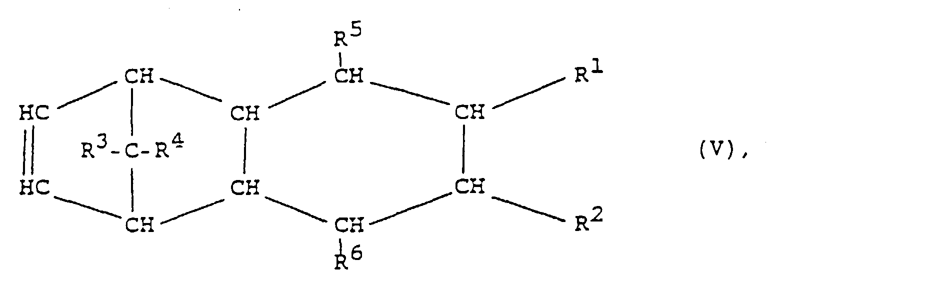 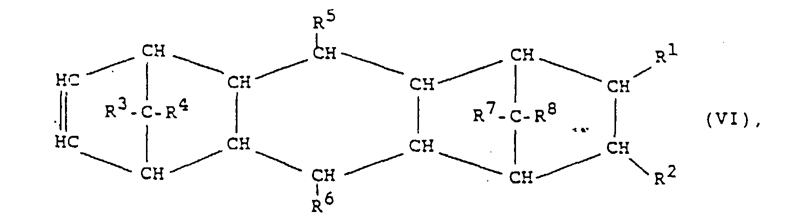 worin R¹, R², R³, R⁴, R⁵, R⁶, R⁷ und R⁸ gleich oder verschieden sind und ein Wasserstoffatom oder einen C₁-C₈-Alkylrest bedeuten, wobei gleiche Reste in den verschiedenen Formeln eine unterschiedliche Bedeutung haben können.

In das Material des Substrats 2 kann zusätzlich ein Cycloolefin der Formel VII eingebaut sein, 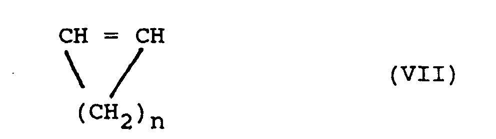 worin n eine Zahl von 2 bis 10 ist. Als weiteren Zusatz kann das Substrat 2 ein acyclisches 1-Olefin der Formel VIII 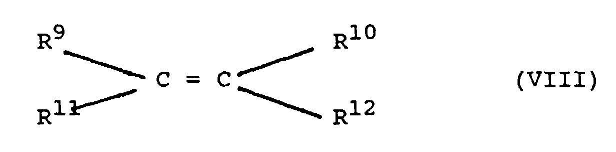 enthalten, worin R⁹, R¹⁰, R¹¹ und R¹² gleich oder verschieden sind und ein Wasserstoffatom oder einen C₁-C₈-Alkylrest bedeuten.

Die für das Substrat bevorzugt verwendeten Cycloolefincopolymere, weiterhin abgekürzt COC, sind Cycloolefine, wie Norbornen-Ethylen- oder Tetracyclododecen-Ethylen-Copolymere. Insbesondere handelt es sich um Copolymer aus Norbornen und Ethylen, die eine thermische Formbeständigkeit für einen Bereich der Glastemperatur von 140 °C bis 200 °C aufweisen. Abweichend von den COC-Basistypen können auch andere Norbornenderivate mit unterschiedlichen 1-Olefinen copolymerisiert werden. Ebenso sind Legierungen verschiedener COC-Typen verwendbar.

In weiterer Ausgestaltung des Substrats 2 ist dieses aus Polymeren von polycyclischen Olefinen durch Polymerisation ohne Ringöffnung von 0,1 bis 100 Gewichtsprozent, bezogen auf die Gesamtmenge der Monomeren, mindestens eines Monomers der Formeln I, II, III, IV, V oder VI 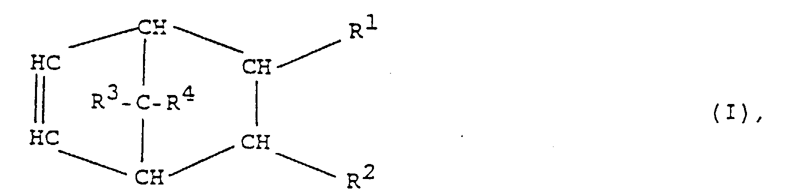 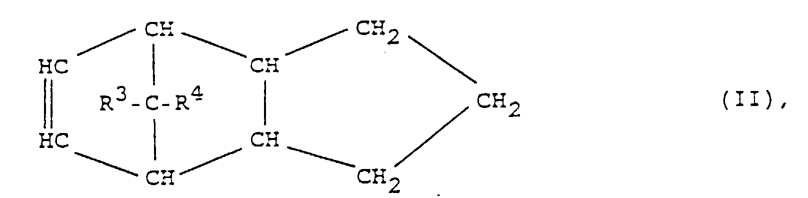 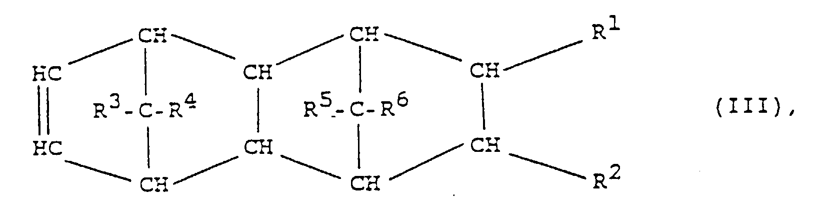 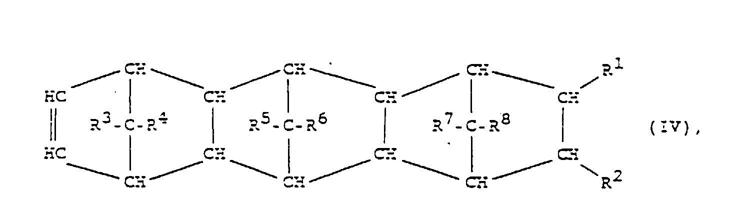 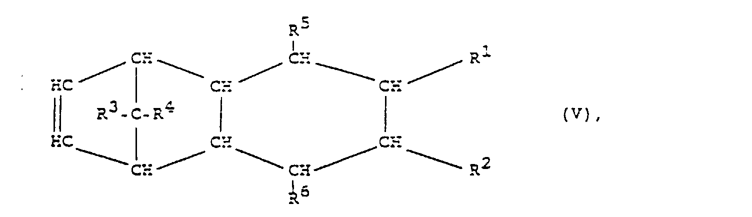 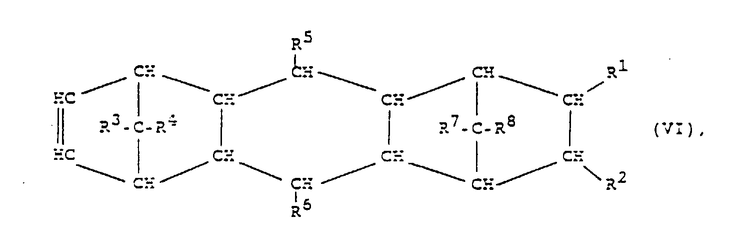 worin R¹, R², R³, R⁴, R⁵, R⁶, R⁷ und R⁸ gleich oder verschieden sind und ein Wasserstoffatom oder einen C₁-C₈-Alkylrest bedeuten, wobei gleiche Reste in den verschiedenen Formeln eine unterschiedliche Bedeutung haben können,
0 bis 99,0 Gew.%, bezogen auf die Gesamtmente der Monomeren, eines Cycloolefins der Formel VII 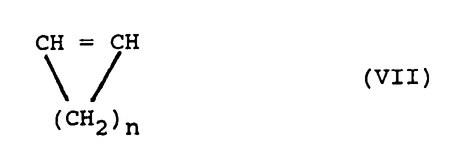 worin n eine Zahl von 2 bis 10 ist, und 0 bis 99,9 Gew.%, bezogen auf die Gesamtmenge der Monomeren, mindestens eines acyclischen 1-Olefins der Formel VIII 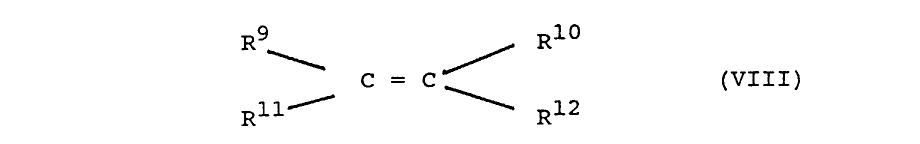 gebildet, worin R⁹, R¹⁰, R¹¹ und R¹² gleich oder verschieden sind und ein Wasserstoffatom oder einen C₁-C₈-Alkylrest bedeuten.

Die wesentlichen Eigenschaften der COC-Basistypen des Substrats 2 können wie folgt zusammengefaßt werden:
- das Material ist amorph und besitzt eine Glastemperatur bis etwa 200 °C;
- ist farblos und transparent;
- besitzt thermische Formbeständigkeit für einen Bereich der Glastemperatur von 140 bis 200 °C;
- eine Dichte von 1,01 bis 1,03 g/cm³;
- der Brechungsindex beträgt 1,52 bis 1,54;
- die Wasseraufnahme bei 23 °C und 85 % relativer Feuchtigkeit ist kleiner als 0,04 %;
- E-Modul beträgt 3,2 bis 3,6 GPa;
- die Reißspannung beträgt 40 bis 66 MPa;
- die Löslichkeit ist in Toluol, Xylol, Cyclohexan, Exxsol (hydrierte Dieselfraktion), Chloroform, Diethyläther gegeben;
- Unlöslichkeit in Wasser, Alkohole, Ketone (Aceton), Ester, Amide (DMF, DMAC, NMP) ist gegeben;
- chemische Resistenz gegen wäßrige und konzentrierte Säuren, wie HCl, H₂SO₃, und Basen NaOH, KOH ist gegeben.

Eine weitere wesentliche Eigenschaft der COC-Basistypen ist ihre geringe inhärente Doppelbrechung, d.h. eine geringe Anisotropie der molekularen Polarisierbarkeit, sowie ihre Hydrolysebeständigkeit.

Norbornen-Ethylen-Copolymere werden gegenüber DMON-Ethylen-Copolymeren bevorzugt, weil bei Norbornen-Ethylen-Copolymeren ein Niveau hoher Isotropie der Polarisierbarkeit bei höheren Glastemperaturen erreicht wird als im Falle von DMON-Ethylen-Copolymeren.

Beispiele für die Synthese einzelner COC-Typen sowie die Beschreibung des Verfahrens zur Herstellung von COC-Typen mittels Massepolymerisation mit speziellen Metallocenkatalysatoren sind in der deutschen Patentanmeldung P 40 36 264.7 (Hoe 90/F 339) beschrieben.

Eine Polymerisation unter Einsatz von Katalysatoren auf der Basis von Metallocenen wird nicht zuletzt wegen der gesundheitlichen Unbedenklichkeit dieser Verbindungen bevorzugt. Besonders bedenklich sind Verfahren zur Herstellung von Substratmaterialien unter Verwendung von Katalysatoren auf Vanadiumbasis. Vanadium ist äußerst giftig, und in der Regel bleiben Spuren von Vanadium im Substratmaterial zurück, was bei dessen Wiederaufarbeitung besondere Sicherheitsmaßnahmen erforderlich macht.

Die magnetooptische Aufzeichnungsschicht ist eine Seltenerd-Übergangsmetallegierung, die beispielsweise eine Zusammensetzung gemäß der Formel

(Tbₓ Fe_{y} Co_{1-x-y})₁₋ₐMₐ

hat, mit M gleich einem Element aus der Gruppe Pt, Se, Cr. Für die einzelnen Legierungskomponenten gelten folgende Bereiche für ihren Anteil in Atomprozenten:
0,20 ≤ x ≤ 0,28
0,64 ≤ y ≤ 0,72
0 ≤ a ≤ 0,10.

In einer speziellen Ausführungsform der magnetooptischen Aufzeichnungsschicht 4 lautet die Zusammensetzung der Seltenerd-Übergangsmetallegierung (Tbₓ Fe_{y} Co_{1-x-y})_{1-b}Cr, mit 0,22 ≤ x ≤ 0,28, 0,58 ≤ y ≤ 0,70 und 0,03 ≤ b ≤ 0,08. Für die Legierungskomponente Cr werden beispielsweise 6 Atomprozent an der Legierung aus Terbium-Eisen-Kobalt bevorzugt, so daß diese beispielsweise die Zusammensetzung Tb_{0,22} Fe_{0,65} Co_{0,07} Cr_{0,06} hat.

Im allgemeinen gilt, daß der Seltenerd-Übergangsmetallegierung der Aufzeichnungsschicht 4 Chrom im Bereich von 3,o bis 8,0 Atomprozent, bezogen auf die Gesamtlegierung, Platin im Bereich von 0,7 bis 5, insbesondere 1 bis 3 Atomprozent, oder Selen im Bereich von 1 bis 10 Atomprozent zulegiert ist. Derartige Seltenerd-Übergangsmetallegierungen mit Platin haben beispielsweise die Zusammensetzung (Tbₓ Fe_{y} Co_{1-x-y})_{1-c}Pt mit 0,22 ≤ x ≤ 0,28; 0,64 ≤ y ≤ 0,70 und 0,007 ≤ c ≤ 0,05, insbesondere 0,01 ≤ c ≤ 0,03.

Selbstverständlich sind auch andere magnetooptische Aufzeichnungsschichten aus einer der Seltenerd-Übergangsmetallegierungen GdFeCo, TbGdFeCo, TbDyFeCo, TbGdDyCo, GdTbDyFeCo für das Aufzeichnungsmedium 8 geeignet.

Die beiden dielektrischen Schichten 3 und 5, die die magnetooptische Aufzeichnungsschicht 4 einschließen, sind üblicherweise aus der gleichen Verbindung hergestellt, jedoch ist es auch möglich, für die beiden dielektrischen Schichten unterschiedliche Materialien einzusetzen. Geeignete Materialien sind Nitride, wie SiNₓ mit 0,9 ≤ x ≤ 1,4, SiON, SiAlON, AlN, AlON oder Oxide wie Ta₂O₅, TaOₓ, NbOₓ mit 1 ≤ x ≤ 2. Die Dicken der dielektrischen Schichten können gleichgroß oder auch unterschiedlich sein. So liegt die Dicke der ersten dielektrischen Schicht 3 zwischen dem Substrat 2 und der magnetooptischen Aufzeichnungsschicht 4 im Bereich von 30 bis 140 nm, insbesondere im Bereich von 50 bis 80 nm. Bei einer Dicke der dielektrischen Schicht 3 im Bereich von 30 bis 140 nm liegt der Brechungsindex n zwischen 1,9 und 2,2. Bei einer Dicke der dielektrischen Schicht 3 von 50 bis 80 nm liegt der Brechungsindex n im Bereich von 2,0 bis 2,1. Die Dicke der zweiten dielektrischen Schicht 5, die zwischen der magnetooptischen Aufzeichnungsschicht 4 und der Reflexionsschicht 6 angeordnet ist, ist im allgemeinen etwas geringer als die Dicke der ersten dielektrischen Schicht 3 und liegt im Bereich von 10 bis 60 nm, wobei der Brechungsindex n gleich 1,9 bis 2,2 lautet. Bevorzugt ist eine Dicke der zweiten dielektrischen Schicht 5 im Bereich von 25 bis 40 nm, mit einem Brechungsindex n im Bereich von 2,0 bis 2,1.

Ein weiteres geeignetes Material für die zweite dielektrische Schicht 5 ist u.a. Aluminiumnitrid, mit einer Dicke von 20 bis 50 nm.

Die Reflexionsschicht 6 besteht gleichfalls aus Aluminium, mit einem Zusatz eines Metalls aus der Gruppe Zirkon, Tantal, Titan, Chrom. Die Zulegierung dieses weiteren Metalls zu der Reflexionsschicht 6 aus Aluminium erfolgt in der Weise, daß die beiden Metalle senkrecht zu der Oberfläche der Reflexionsschicht 6 einen Konzentrationsgradienten aufweisen.

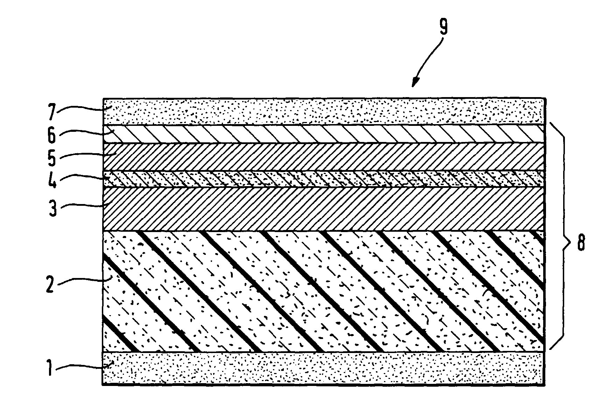

## Patentansprüche

1. Magnetooptisches Aufzeichnungsmedium aus zumindest vier Lagen, die auf einem Substrat übereinander aufgeschichtet sind und zwei dielektrische Schichten, eine Reflexions- und eine magnetooptische Aufzeichnungsschicht umfassen, dadurch gekennzeichnet, daß das Substrat (2) aus Polymeren von polycyclischen Olefinen durch Massepolymerisation mit Hilfe eines Metallocenkatalysators ohne Ringöffnung von mindestens einem Monomeren der Formeln I, II, III, IV, V oder VI gebildet ist, 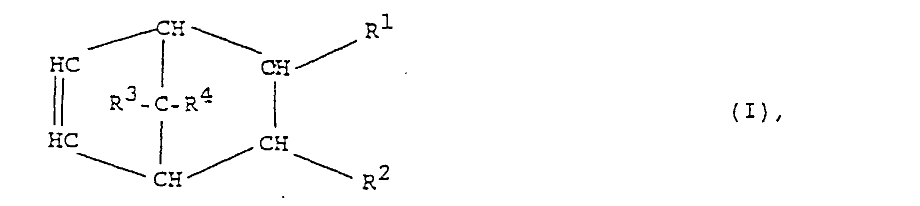 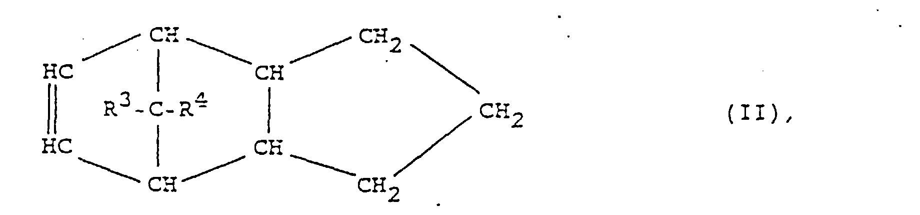 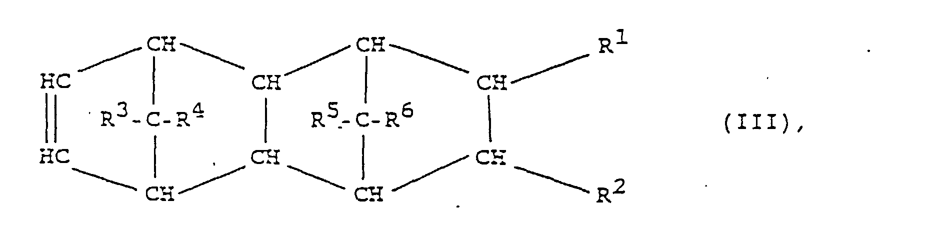 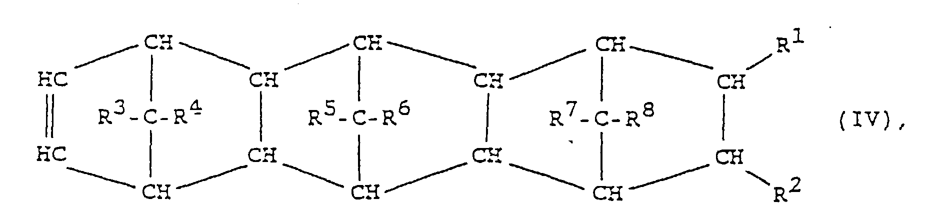 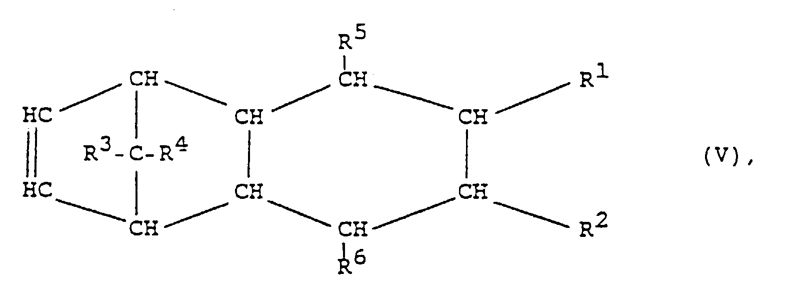 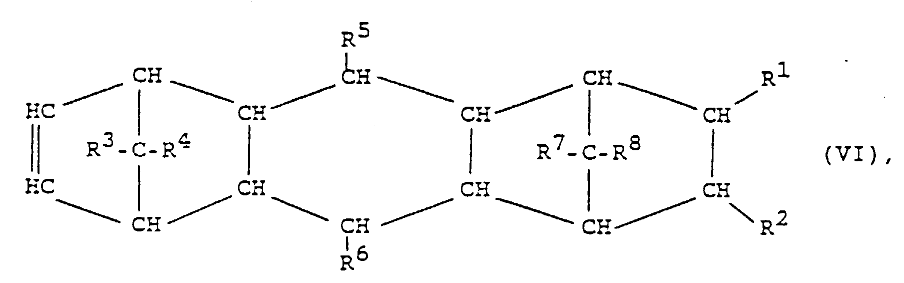 worin R¹, R², R³, R⁴, R⁵, R⁶, R⁷ und R⁸ gleich oder verschieden sind und ein Wasserstoffatom oder einen C₁-C₈-Alkylrest bedeuten, wobei gleiche Reste in den verschiedenen Formeln eine unterschiedliche Bedeutung haben können.

2. Magnetooptisches Aufzeichnungsmedium nach Anspruch 1, dadurch gekennzeichnet, daß in das Material des Substrats (2) zusätzlich ein Cycloolefin der Formel VII 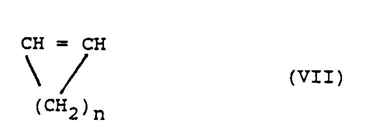 eingebaut ist, worin n eine Zahl von 2 bis 10 ist.

3. Magnetooptisches Aufzeichnungsmedium nach Anspruch 1 oder 2, dadurch gekennzeichnet, daß das Substrat (2) zusätzlich mindestens ein acyclisches 1-Olefin der Formel VIII 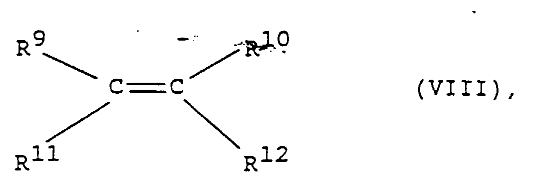 enthält, worin R⁹, R¹⁰, R¹¹ und R¹² gleich oder verschieden sind und ein Wasserstoffatom oder einen C₁-C₈-Alkylrest bedeuten.

4. Magnetooptisches Aufzeichnungsmedium nach mehreren der Ansprüche 1 bis 3, dadurch gekennzeichnet, daß das Substrat (2) aus einer Mischung unterschiedlicher Polymere, die in den Ansprüchen 1 bis 3 genannt sind, besteht.

5. Magnetooptisches Aufzeichnungsmedium aus zumindest vier Lagen, die auf einem Substrat übereinander aufgeschichtet sind und zwei dielektrische Schichten, eine Reflexions- und eine magnetooptische Aufzeichnungsschicht umfassen, dadurch gekennzeichnet, daß das Substrat (2) aus Polymeren von polycyclischen Olefinen durch Massepolymerisation mit Hilfe eines Metallocenkatalysators ohne Ringöffnung von 0,1 bis 100 Gew.%, bezogen auf die Gesamtmenge der Monomeren, mindestens eines Monomers der Formeln I, II, III, IV, V oder VI 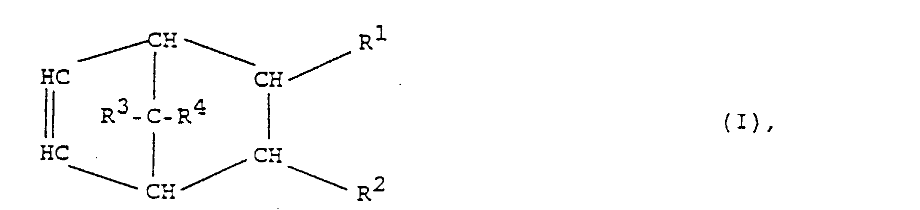 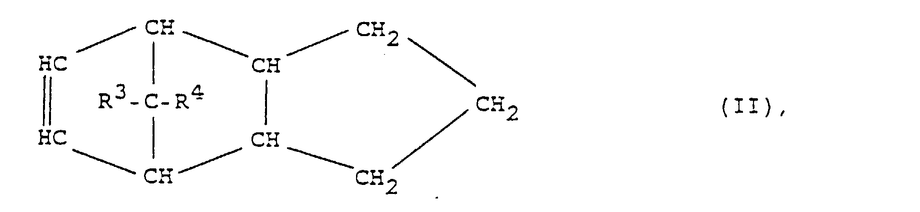 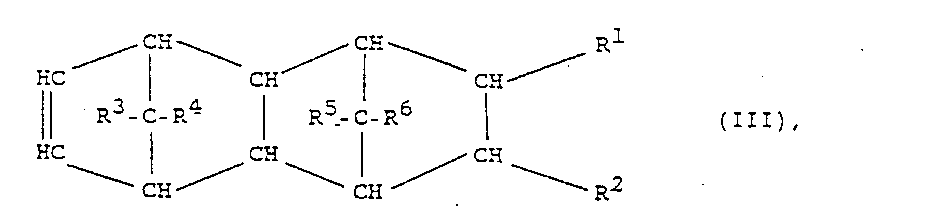 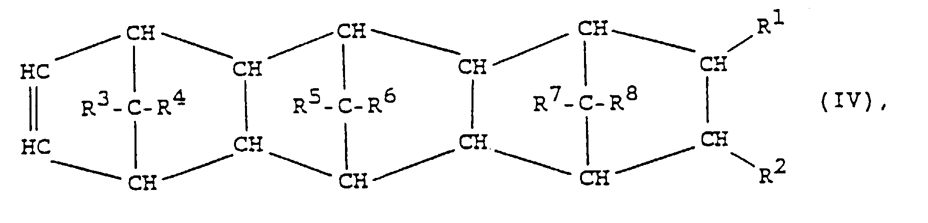 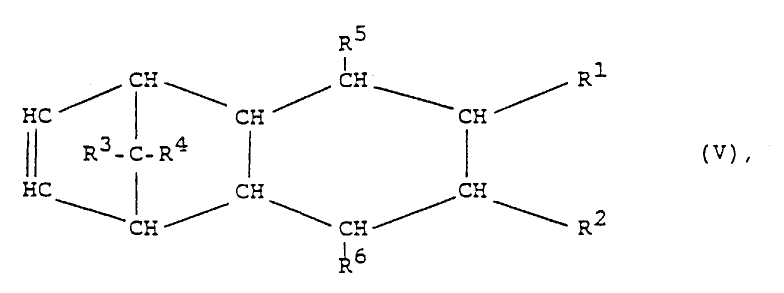 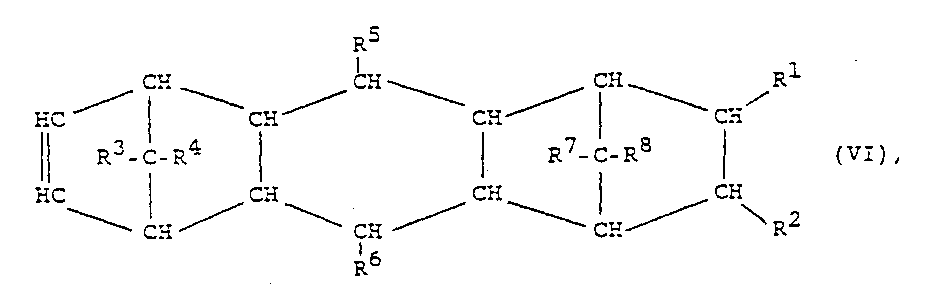 worin R¹, R², R³, R⁴, R⁵, R⁶, R⁷ und R⁸ gleich oder verschieden sind und ein Wasserstoffatom oder einen C₁-C₈-Alkylrest bedeuten, wobei gleiche Reste in den verschiedenen Formeln eine unterschiedliche Bedeutung haben können,
0 bis 99,0 Gew.%, bezogen auf die Gesamtmenge der Monomeren, eines Cycloolefins der Formel VII 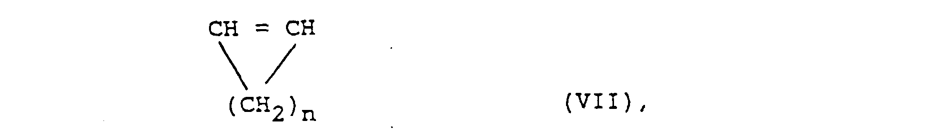 worin n eine Zahl von 2 bis 10 ist, und
0 bis 99,9 Gew.-%, bezogen auf die Gesamtmenge der Monomeren, mindestens eines acyclischen 1-Olefins der Formel VIII 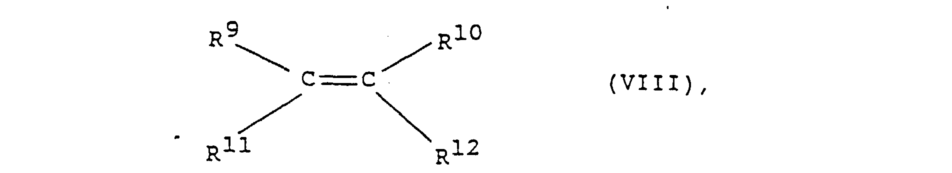 gebildet ist, worin R⁹, R¹⁰, R¹¹ und R¹² gleich oder verschieden sind und ein Wasserstoffatom oder einen C₁-C₈-Alkylrest bedeuten.

6. Magnetooptisches Aufzeichnungsmedium nach einem oder mehreren der Ansprüche 1 bis 5, dadurch gekennzeichnet, daß das Substrat (2) ein Norbornen-Ethylen-Copolymer oder ein Tetracyclododecen-Ethylen-Copolymer ist.

7. Magnetooptisches Aufzeichnungsmedium nach einem oder mehreren der Ansprüche 1 bis 6, dadurch gekennzeichnet, daß das Substrat (2) aus Copolymeren aus Norbornen und Ethylen besteht und eine thermische Formbeständigkeit für einen Bereich der Glastemperatur von 140 °C bis 200 °C aufweist.

8. Magnetooptisches Aufzeichnungsmedium nach einem oder mehreren der Ansprüche 1 bis 7, dadurch gekennzeichnet, daß die magnetooptische Aufzeichnungsschicht (4) aus einer amorphen seltenerd-Übergangsmetall-Legierung mit den Übergangsmetallen Fe und Co und zumindest einem Seltenerdmetall aus der Gruppe Gd, Tb, Dy besteht, daß die Aufzeichnungsschicht (4) eine leicht zu magnetisierende Achse senkrecht zur Oberfläche und eine Dicke zwischen 18 und 30 nm aufweist und daß zumindest ein weiteres Element aus der Gruppe Pt, Se, Cr Bestandteil der Legierung ist.

9. Magnetooptisches Aufzeichnungsmedium nach Anspruch 8, dadurch gekennzeichnet, daß die Dicke der magnetooptischen Aufzeichnungsschicht 23 bis 28 nm beträgt.

10. Magnetooptisches Aufzeichnungsmedium nach Anspruch 8, dadurch gekennzeichnet, daß die magnetooptische Aufzeichnungsschicht eine Seltenerd-Übergangsmetall-Legierung der Zusammensetzung
[Tbₓ Fe_{y} Co_{1-x-y}]₁₋ₐ Mₐ
mit 0,20 ≤ x ≤ 0,28
0,64 ≤ y ≤ 0,72
0 ≤ a ≤ 0,10
und M ein Element aus der Gruppe Pt, Se, Cr ist.

11. Magnetooptisches Aufzeichnungsmedium nach Anspruch 10, dadurch gekennzeichnet, daß die Aufzeichnungsschicht eine Seltenerd-Übergangsmetall-Legierung der Zusammensetzung
(Tbₓ Fe_{y} Co_{1-x-y})_{1-b} Cr_{b}
mit 0,22 ≤ x ≤ 0,28
0,58 ≤ y ≤ 0,70
0,03 ≤ b ≤ 0,08
ist.

12. Magnetooptisches Aufzeichnungsmedium nach Anspruch 10, dadurch gekennzeichnet, daß die Aufzeichnungsschicht eine Seltenerd-Übergangsmetall-Legierung der Zusammensetzung
Tb_{0,22} Fe_{0,65} Co_{0,07} Cr_{0,06}
ist.

13. Magnetooptisches Aufzeichnungsmedium nach Anspruch 10, dadurch gekennzeichnet, daß die Aufzeichnungsschicht eine Seltenerd-Übergangsmetall-Legierung der Zusammensetzung
(Tbₓ Fe_{y} Co_{1-x-y})_{1-c} Pt_{c}
mit 0,22 ≤ x ≤ 0,28
0,64 ≤ y ≤ 0,70
0,007 ≤ c ≤ 0,05
ist.

14. Magnetooptisches Aufzeichnungsmedium nach Anspruch 10, dadurch gekennzeichnet, daß die Aufzeichnungsschicht eine Seltenerd-Übergangsmetall-Legierung der Zusammensetzung
(Tbₓ Fe_{y} Co_{1-x-y})_{1-d} Se_{d}
mit 0,22 ≤ x ≤ 0,28
0,64≤ y ≤ 0,70
0,01 ≤ d ≤ 0,10
ist.

15. Magnetooptisches Aufzeichnungsmedium nach Anspruch 8, dadurch gekennzeichnet, daß die Aufzeichnungsschicht aus einer der Seltenerd-Übergangsmetall-Legierungen GdFeCo, TbGdFeCo, TbDyFeCo, TbGdDyCo, GdTbDyFeCo besteht und zusätzlich zumindest eines der Elemente Pt, Se, Cr enthält.

16. Magnetooptisches Aufzeichnungsmedium nach Anspruch 15, dadurch gekennzeichnet, daß der Seltenerd-Übergangsmetall-Legierung der Aufzeichnungsschicht Chrom im Bereich von 3 bis 8 Atom%, bezogen auf die Gesamtlegierung, Platin im Bereich von 0,7 bis 5, insbesondere 1 bis 3 Atom%, oder Selen im Bereich von 1 bis 10 Atom% zulegiert ist.

17. Magnetooptisches Aufzeichnungsmedium nach Anspruch 1, dadurch gekennzeichnet, daß die magnetooptische Aufzeichnungsschicht (4) von den beiden dielektrischen Schichten (3, 5) aus SiNₓ, SiON, SiAlON, AlN, AlON, Ta₂O₅, TaOₓ oder NbOₓ mit 0,9 ≤ x ≤ 1,4 für SiNₓ und 1 ≤ x ≤ 2 für TaOₓ und NbOₓ eingeschlossen ist.

18. Magnetooptisches Aufzeichnungsmedium nach Anspruch 17, dadurch gekennzeichnet, daß die Dicke der ersten dielektrischen Schicht (3) zwischen dem Substrat (2) und der magnetooptischen Aufzeichnungsschicht (4) 30 bis 140 nm und der Brechungsindex n = 1,9 bis 2,2 beträgt.

19. Magnetooptisches Aufzeichnungsmedium nach Anspruch 18, dadurch gekennzeichnet, daß die Dicke der dielektrischen Schicht (3) 50 bis 80 nm und der Brechungsindex n = 2,0 bis 2,1 beträgt.

20. Magnetooptisches Aufzeichnungsmedium nach Anspruch 17, dadurch gekennzeichnet, daß die Dicke der zweiten dielektrischen Schicht (5), die zwischen der magnetooptischen Aufzeichnungsschicht (4) und der Reflexionsschicht (6) angeordnet ist, 10 bis 60 nm und der Brechungsindex n = 1,9 bis 2,2 beträgt.

21. Magnetooptisches Aufzeichnungsmedium nach Anspruch 20, dadurch gekennzeichnet, daß die Dicke der zweiten dielektrischen Schicht (5) 25 bis 40 nm und der Brechungsindex n = 2,0 bis 2,1 beträgt.

22. Magnetooptisches Aufzeichnungsmedium nach Anspruch 8, dadurch gekennzeichnet, daß die zweite dielektrische Schicht (5) aus Aluminiumnitrid, mit einer Dicke von 20 bis 50 nm besteht.

23. Magnetooptisches Aufzeichnungsmedium nach einem oder mehreren der Ansprüche 1 bis 8, dadurch gekennzeichnet, daß die Reflexionsschicht (6) ein Metall aus der Gruppe Al, Cu, Ag, Au ist und ihre Dicke im Bereich von 20 bis 80 nm liegt.

24. Magnetooptisches Aufzeichnungsmedium nach Anspruch 23, dadurch gekennzeichnet, daß die Reflexionsschicht (6) aus Aluminium, mit einem Zusatz eines Metalls aus der Gruppe Zr, Ta, Ti, Cr besteht.

25. Magnetooptisches Aufzeichnungsmedium nach Anspruch 24, dadurch gekennzeichnet, daß die.beiden Metalle der Reflexionsschicht (6) senkrecht zu ihrer Oberfläche einen Konzentrationsgradienten aufweisen.

26. Magnetooptisches Aufzeichnungsmedium nach einem oder mehreren der Ansprüche 1 bis 25, dadurch gekennzeichnet, daß das Aufzeichnungsmedium (8) auf der Vorder- und der Rückseite mit einer Schutzlackschicht (7, 1) ausgestattet ist.

## Claims

1. A magneto-optical recording medium of at least four layers which are placed one on top of the other on a substrate and comprise two dielectric layers, a reflector layer and a magneto-optical recording layer, wherein the substrate (2) is formed from polymers of polycyclic olefins by mass polymerization, using a metallocene catalyst, without ring cleavage, of at least one monomer of the formula I, II, III, IV, V or VI 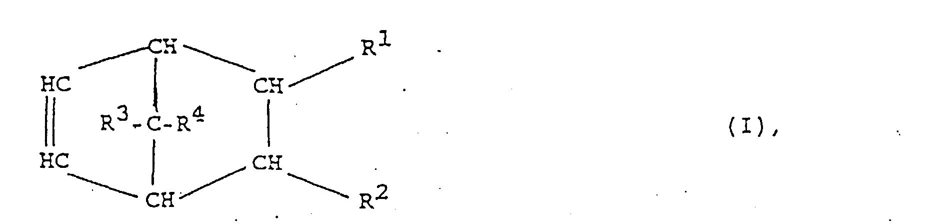 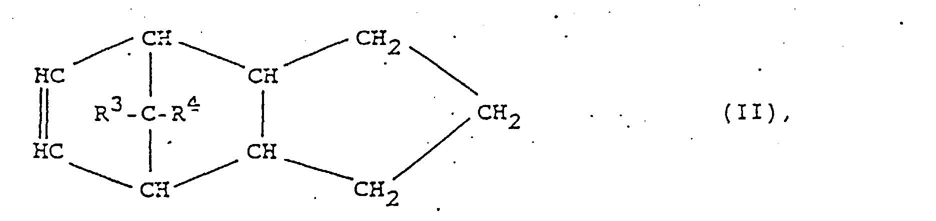 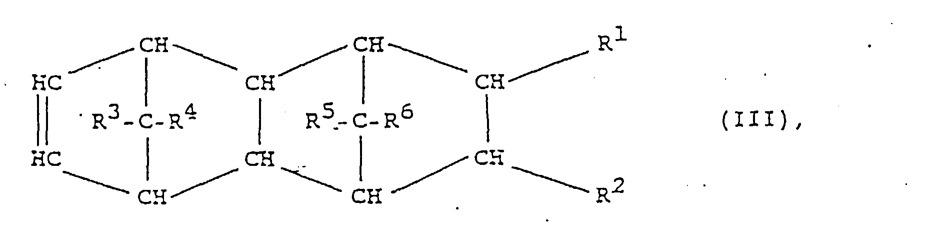 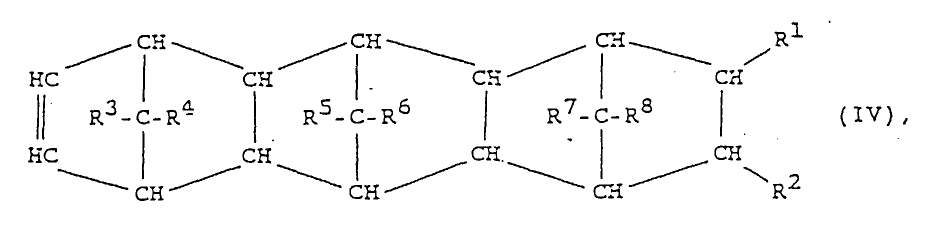 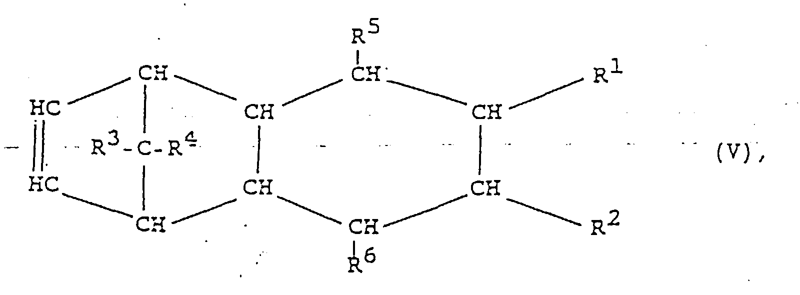 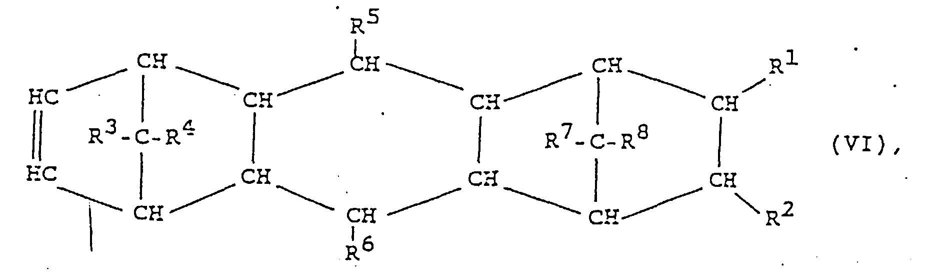 in which R¹, R², R³, R⁴, R⁵, R⁶, R⁷ and R⁸ are identical or different and are a hydrogen atom or a C₁-C₈-alkyl radical, and identical radicals may have a different meaning in the different formulae.

2. The magneto-optical recording medium as claimed in claim 1, wherein a cycloolefin of the formula VII 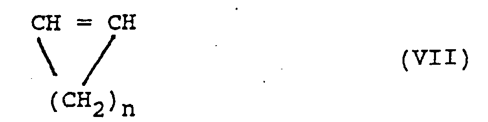 in which n is a number from 2 to 10, is additionally incorporated in the material of the substrate (2).

3. The magneto-optical recording medium as claimed in claim 1 or 2, wherein the substrate (2) additionally contains at least one acyclic 1-olefin of the formula VIII 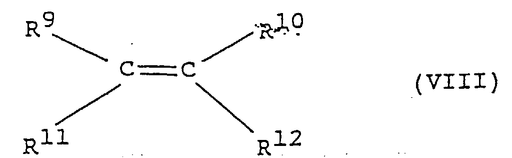 in which R⁹, R¹⁰, R¹¹ and R¹² are identical or different and are a hydrogen atom or a C₁-C₈-alkyl radical.

4. The magneto-optical recording medium as claimed in a plurality of claims 1 to 3, wherein the substrate (2) comprises a mixture of different polymers which are stated in claims 1 to 3.

5. The magneto-optical recording medium of at least four layers which are placed one on top of the other on a substrate and comprise two dielectric layers, a reflector and a magneto-optical recording layer, wherein the substrate (2) is formed from polymers of polycyclic olefins by mass polymerization, using a metallocene catalyst, without ring cleavage, of 0.1 to 100% by weight, based on the total amount of the monomers, of at least one monomer of the formula I, II, III, IV, V or VI 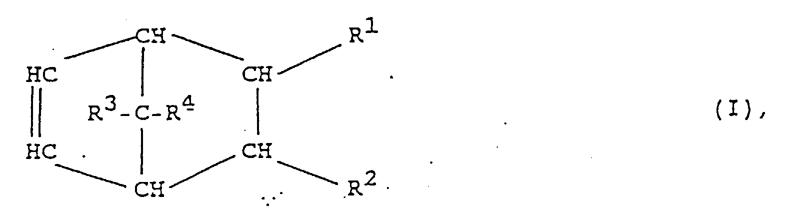 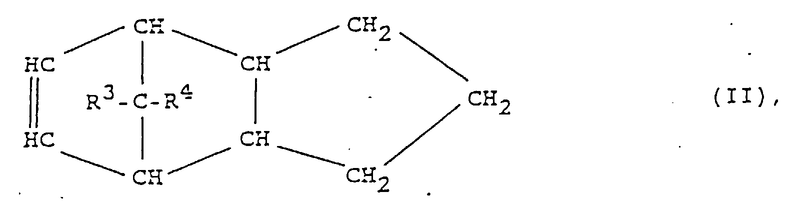 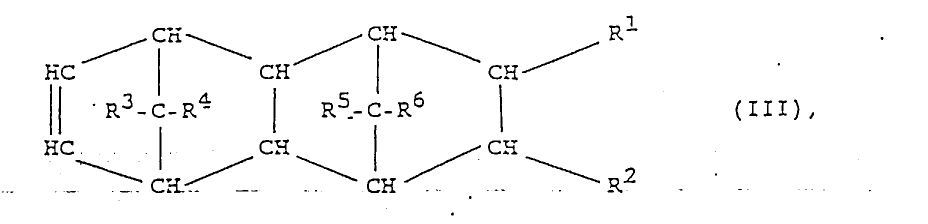 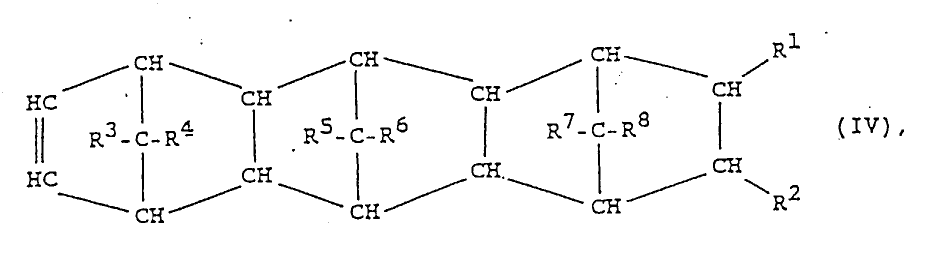 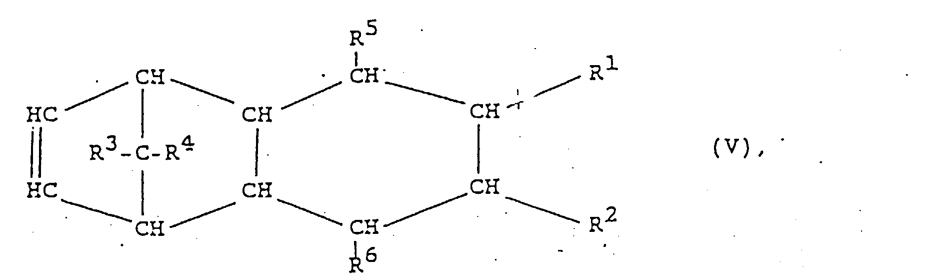 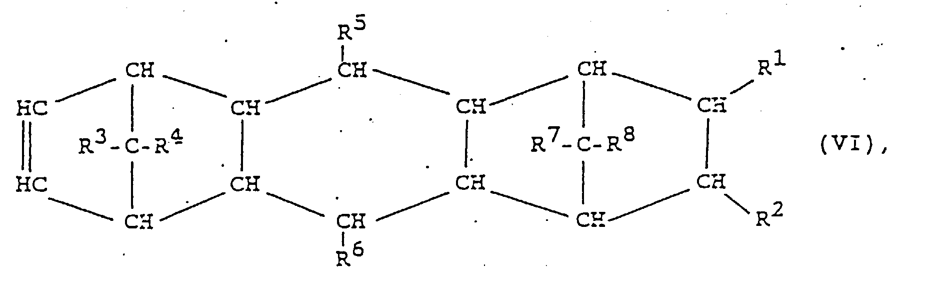 in which R¹, R², R³, R⁴, R⁵, R⁶, R⁷ and R⁸ are identical or different and are a hydrogen atom or a C₁-C₈-alkyl radical, and identical radicals may have a different meaning in the different formulae,
0 to 99.0% by weight, based on the total amount of the monomers, of a cycloolefin of the formula VII 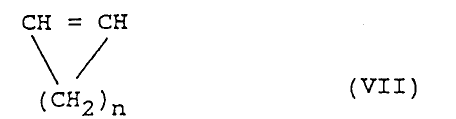 in which n is a number from 2 to 10, and
0 to 99.9% by weight, based on the total amount of the monomers, of at least one acyclic 1-olefin of the formula VIII 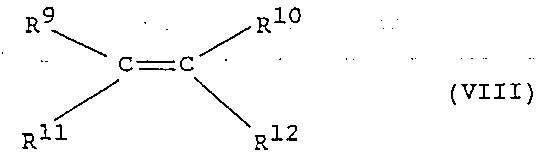 in which R⁹, R¹⁰, R¹¹ and R¹² are identical or different and are a hydrogen atom or a C₁-C₈-alkyl radical.

6. The magneto-optical recording medium as claimed in one or more of claims 1 to 5, wherein the substrate (2) is a norbornene/ethylene copolymer or a tetracyclododecene/ethylene copolymer.

7. The magneto-optical recording medium as claimed in one or more of claims 1 to 6, wherein the substrate (2) comprises copolymers of norbornene and ethylene and has a thermal dimensional stability for a range of the glass transition temperature of 140°C to 200°C.

8. The magneto-optical recording medium as claimed in one or more of claims 1 to 7, wherein the magneto-optical recording layer (4) comprises an amorphous rare earth/transition metal alloy containing the transition metals Fe and Co and at least one rare earth metal selected from the group comprising Gd, Tb and Dy, the recording layer (4) has an axis of easy magnetization at right angles to the surface and a thickness of between 18 and 30 nm, and at least one further element selected from the group comprising Pt, Se and Cr is part of the alloy.

9. The magneto-optical recording medium as claimed in claim 8, wherein the thickness of the magneto-optical recording layer is 23 to 28 nm.

10. The magneto-optical recording medium as claimed in claim 8, wherein the magneto-optical recording layer is a rare earth/transition metal alloy having the composition
[TbₓFe_{y}Co_{1-x-y}]₁₋ₐMₐ
in which 0.20 ≤ x ≤ 0.28
0.64 ≤ y ≤ 0.72
0 ≤ a ≤ 0.10
and M is an element selected from the group comprising Pt, Se and Cr.

11. The magneto-optical recording medium as claimed in claim 10, wherein the recording layer is a rare earth/transition metal alloy having the composition
[TbₓFe_{y}Co_{1-x-y}]_{1-b}Cr_{b}
in which 0.22 ≤ x ≤ 0.28
0.56 ≤ y ≤ 0.70
0.03 ≤ b ≤ 0.08 .

12. The magneto-optical recording medium as claimed in claim 10, wherein the recording layer is a rare earth/transition metal alloy having the composition
Tb_{0.22}Fe_{0.65}Co_{0.07}Cr_{0.06}.

13. The magneto-optical recording medium as claimed in claim 10, wherein the recording layer is a rare earth/transition metal alloy having the composition
(TbₓFe_{y}Co_{1-x-y})_{1-c}Pt_{c}
in which 0.22 ≤ x ≤ 0.28
0.64 ≤ y ≤ 0.70
0.007 ≤ c ≤ 0.05.

14. The magneto-optical recording medium as claimed in claim 10, wherein the recording layer is a rare earth/transition metal alloy having the composition
(TbₓFe_{y}Co_{1-x-y}]_{1-d}Se_{d}
in which 0.22 ≤ x ≤ 0.28
0.64 ≤ y ≤ 0.70
0.01 ≤ d ≤ 0.10.

15. The magneto-optical recording medium as claimed in claim 8, wherein the recording layer comprises one of the rare earth/transition metal alloys GdFeCo, TbGdfeCo, TbDyFeCo, TbGdDyCo or GdTbDyfeCo and additionally contains at least one of the elements Pt, Se and Cr.

16. The magneto-optical recording medium as claimed in claim 15, wherein chromium in the range from 3 to 8 atom %, based on the total alloy, platinum in the range from 0.7 to 5, in particular 1 to 3, atom %, or selenium in the range from 1 to 10 atom % is alloyed with the rare earth/transition metal alloy of the recording layer.

17. The magneto-optical recording medium as claimed in claim 1, wherein the magneto-optical recording layer (4) is enclosed by the two dielectric layers (3, 5) of SiNₓ, SiON, SiAlON, AlN, AlON, Ta₂O₅, TaOₓ or NbOₓ in which 0.9 ≤ x ≤ 1.4 for SiNₓ and 1 ≤ x ≤ 2 for TaOₓ and NbOₓ.

18. The magneto-optical recording medium as claimed in claim 17, wherein the thickness of the first dielectric layer (3) between the substrate (2) and the magneto-optical recording layer (4) is 30 to 140 nm and the refractive index n = 1.9 to 2.2

19. The magneto-optical recording medium as claimed in claim 18, wherein the thickness of the dielectric layer (3) is 50 to 80 nm and the refractive index n = 2.0 to 2.1.

20. The magneto-optical recording medium as claimed in claim 17, wherein the thickness of the second dielectric layer (5) which is arranged between the magneto-optical recording layer (4) and the reflector layer (6) is 10 to 60 nm and the refractive index n = 1.9 to 2.2

21. The magneto-optical recording medium as claimed in claim 20, wherein the thickness of the second dielectric layer (5) is 25 to 40 nm and the refractive index n = 2.0 to 2.1.

22. The magneto-optical recording medium as claimed in claim 8, wherein the second dielectric layer (5) comprises aluminum nitride, with a thickness of 20 to 50 nm.

23. The magneto-optical recording medium as claimed in one or more of claims 1 to 8, wherein the reflector layer (6) is a metal selected from the group comprising Al, Cu, Ag and Au and its thickness is in the range from 20 to 80 nm.

24. The magneto-optical recording medium as claimed in claim 23, wherein the reflector layer (6) comprises aluminum with an addition of a metal selected from the group comprising Zr, Ta, Ti and Cr.

25. The magneto-optical recording medium as claimed in claim 24, wherein the two metals of the reflector layer (6) have a concentration gradient at right angles to the layer surface.

26. The magneto-optical recording medium as claimed in one or more of claims 1 to 25, wherein the recording medium (8) is equipped with a protective coating film (7, 1) on the front and the back.

## Revendications

1. Milieu d'enregistrement magnéto-optique constitué d'au moins quatre couches, qui sont superposées sur un substrat, et comprennent deux couches diélectriques, une couche réfléchissante et une couche d'enregistrement magnéto-optique, caractérisé en ce que le substrat (2) est formé de polymères d'oléfines polycycliques obtenus par polymérisation en masse sans ouverture de cycles, en présence d'un catalyseur métallocène, d'au moins un monomère de formules I, II, III, IV, V ou VI 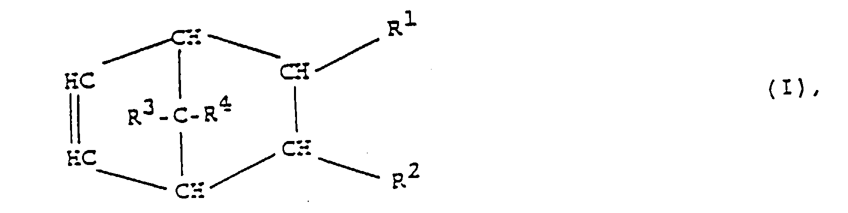 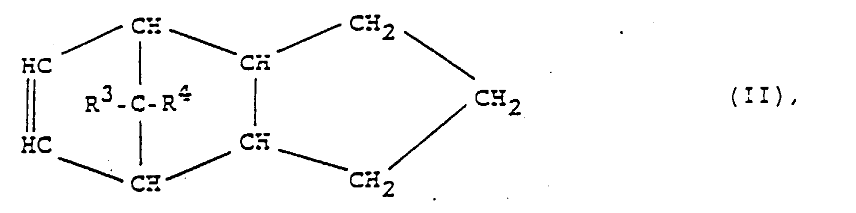 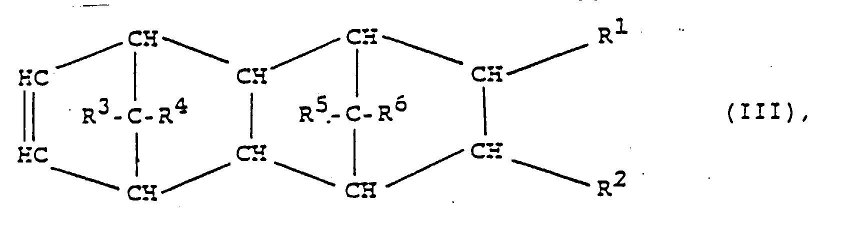 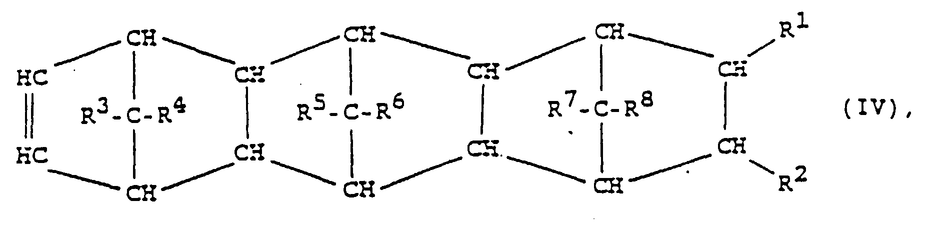 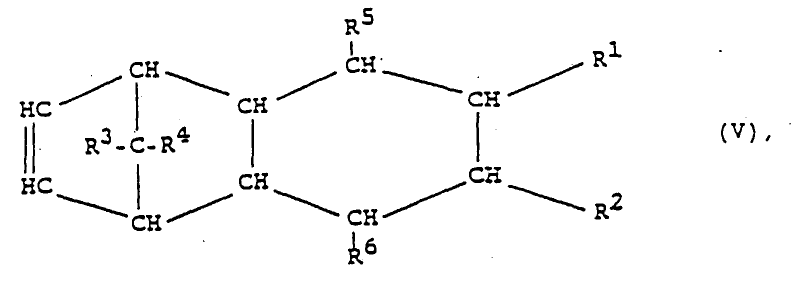 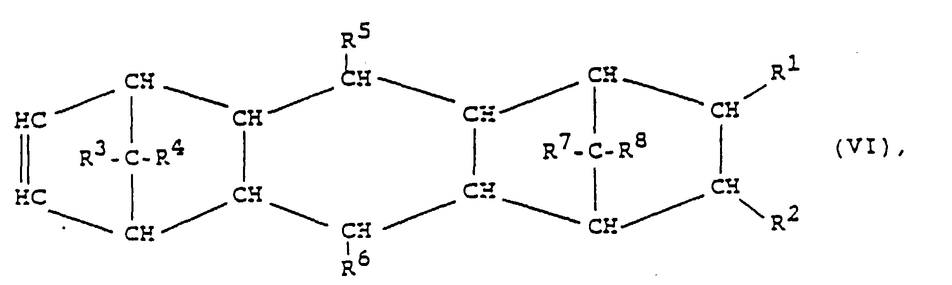 dans lesquelles R¹, R², R³, R⁴, R⁵, R⁶, R⁷ et R⁸ sont identiques ou différents et représentent un atome d'hydrogène ou un radical alkyle en C₁-C₈, des radicaux identiques pouvant avoir des significations différentes dans les différentes formules.

2. Milieu d'enregistrement magnéto-optique selon la revendication 1, caractérisé en ce que l'on incorpore en outre dans le matériau de substrat (2) une cyclooléfine de formule VII 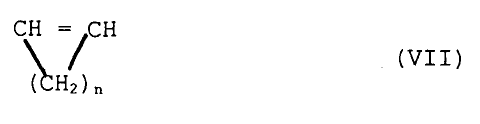 dans laquelle n est un nombre compris entre 2 et 10.

3. Milieu d'enregistrement magnéto-optique selon la revendication 1 ou 2, caractérisé en ce que le substrat (2) contient de plus au moins une 1-oléfine acyclique de formule VIII 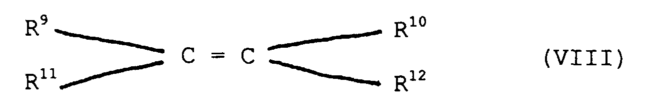 dans laquelle R⁹, R¹⁰, R¹¹ et R¹² sont identiques ou différents et représentent un atome d'hydrogène ou un radical alkyle en C₁-C₈.

4. Milieu d'enregistrement magnéto-optique selon plusieurs des revendications 1 à 3, caractérisé en ce que le substrat (2) est constitué d'un mélange de différents polymères qui sont cités dans les revendications 1 à 3.

5. Milieu d'enregistrement magnéto-optique constitué d'au moins quatre couches, qui sont superposées sur un substrat, et comprennent deux couches diélectriques, une couche réfléchissante et une couche d'enregistrement magnéto-optique, caractérisé en ce que le substrat (2) est formé de polymères d'oléfines polycycliques obtenus par polymérisation en masse sans ouverture de cycles, en présence d'un catalyseur métallocène, de 0,1 à 100% en poids, par rapport à la masse totale des monomères, d'au moins un monomère de formules I, II, III, IV, V ou VI, 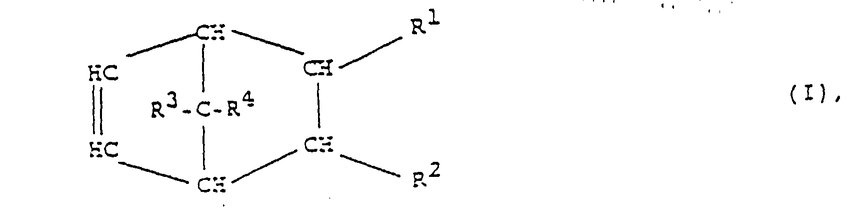 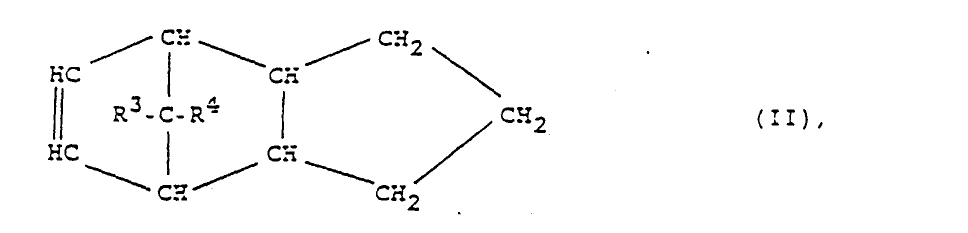 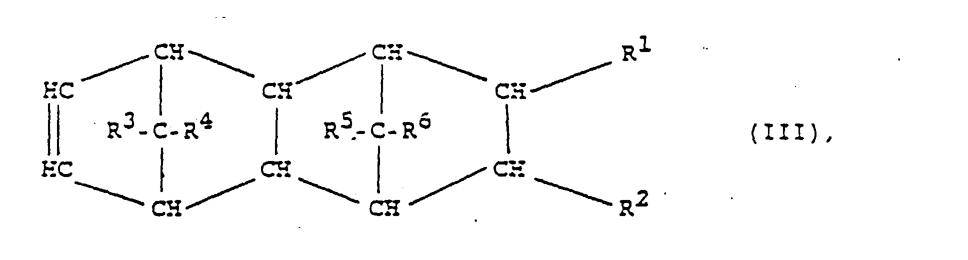 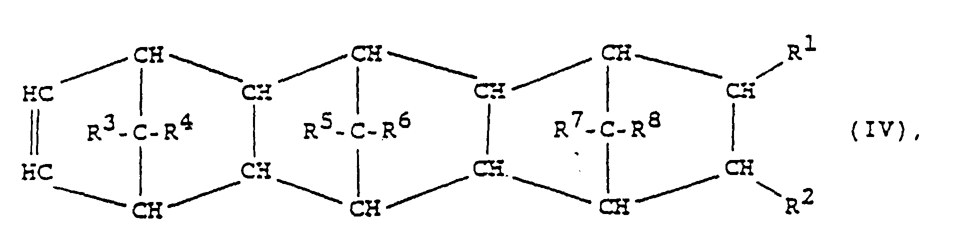 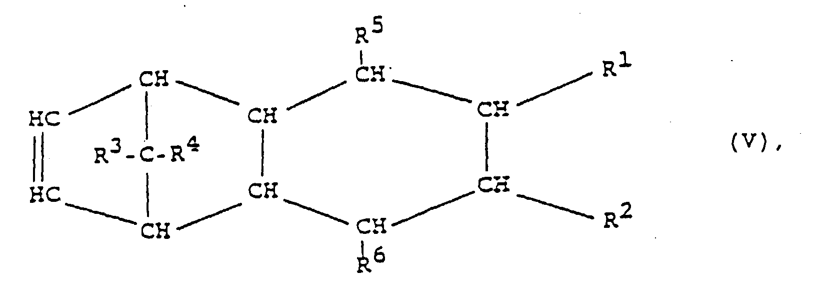 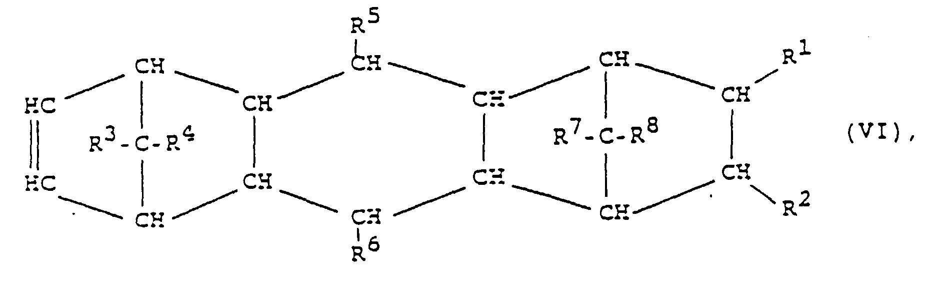 dans lesquelles R¹, R², R³, R⁴, R⁵, R⁶, R⁷ et R⁸ sont identiques ou différents et représentent un atome d'hydrogène ou un radical alkyle en C₁-C₈, des radicaux identiques pouvant avoir des significations différentes dans les différentes formules,
de 0 à 99,0% en poids, par rapport à la masse totale des monomères, d'une cyclooléfine de formule VII 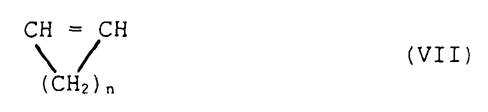 dans laquelle n est un nombre compris entre 2 et 10, et de 0 à 99,9% en poids, par rapport à la masse totale des monomères, d'au moins une 1-oléfine acyclique de formule VIII 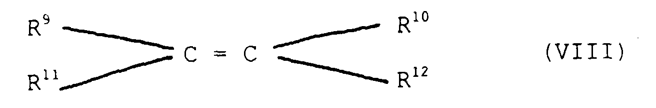 dans laquelle R⁹, R¹⁰, R¹¹ et R¹² sont identiques ou différents et représentent un atome d'hydrogène ou un radical alkyle en C₁-C₈.

6. Milieu d'enregistrement magnéto-optique selon une ou plusieurs des revendications 1 à 5, caractérisé en ce que le substrat (2) est un copolymère norbornylène-éthylène ou tétracyclododécène-éthylène.

7. Milieu d'enregistrement magnéto-optique selon une ou plusieurs des revendications 1 à 6, caractérisé en ce que le substrat (2) est constitué de copolymères de norbornylène et d'éthylène et présente une stabilité thermique dimensionnelle pour un domaine de variation de la température de transition vitreuse compris entre 140°C et 200°C.

8. Milieu d'enregistrement magnéto-optique selon une ou plusieurs des revendications 1 à 7, caractérisé en ce que la couche d'enregistrement (4) magnéto-optique est constituée d'un alliage amorphe de métaux de terres rares et de métaux de transition avec les métaux de transition Fe et Co et au moins un métal de terres rares du groupe Gd, Tb, Dy, en ce que la couche d'enregistrement (4) présente un axe perpendiculaire à la surface facile à magnétiser et une épaisseur comprise entre 18 et 30 nm et en ce qu'au moins un autre élément du groupe Pt, Se, Cr est un composant de l'alliage.

9. Milieu d'enregistrement magnéto-optique selon la revendication 8, caractérisé en ce que l'épaisseur de la couche d'enregistrement magnéto-optique est comprise entre 23 et 28 nm.

10. Milieu d'enregistrement magnéto-optique selon la revendication 8, caractérisé en ce que la couche d'enregistrement magnéto-optique est un alliage de métaux de terres rares et de métaux de transition de composition
[Tbₓ Fe_{y} Co_{1-x-y}]₁₋ₐMₐ,
avec 0,20 ≤ x ≤ 0,28
0,64 ≤ y ≤ 0,72
0 ≤ a ≤ 0,10
et M est un élément du group Pt, Se, Cr.

11. Milieu d'enregistrement magnéto-optique selon la revendication 10, caractérisé en ce que la couche d'enregistrement magnéto-optique est un alliage de métaux de terres rares et de métaux de transition de composition
(Tbₓ Fe_{y} Co_{1-x-y})_{1-b}Cr_{b}
avec 0,22 ≤ x ≤ 0,28
0,58 ≤ y ≤ 0,70
0,03 ≤ b ≤ 0,08.

12. Milieu d'enregistrement magnéto-optique selon la revendication 10, caractérisé en ce que la couche d'enregistrement magnéto-optique est un alliage de métaux de terres rares et de métaux de transition de composition
Tb_{0,22}Fe_{0,65}Co_{0,07}Cr_{0,06}.

13. Milieu d'enregistrement magnéto-optique selon la revendication 10, caractérisé en ce que la couche d'enregistrement magnéto-optique est un alliage de métaux de terres rares et de métaux de transition de composition
(Tbₓ Fe_{y} Co_{1-x-y})_{1-c}Pt_{c}
avec 0,22 ≤ x ≤ 0,28
0,64 ≤ y ≤ 0,70
0,007 ≤ c ≤ 0,05.

14. Milieu d'enregistrement magnéto-optique selon la revendication 10, caractérisé en ce que la couche d'enregistrement magnéto-optique est un alliage de métaux de terres rares et de métaux de transition de composition
(Tbₓ Fe_{y} Co_{1-x-y})_{1-d}Se_{d}
avec 0,22 ≤ x ≤ 0,28
0,64 ≤ y ≤ 0,70
0,01 ≤ d ≤ 0,10.

15. Milieu d'enregistrement magnéto-optique selon la revendication 8, caractérisé en ce que la couche d'enregistrement est constituée d'un des alliages métaux de terres rares-métaux de transition GdFeCo, TbGdFeCo, TbDyFeCo, TbGdDyCo, GdTbDyFeCo et contient de plus au moins un des éléments Pt, Se, Cr.

16. Milieu d'enregistrement magnéto-optique selon la revendication 15, caractérisé en ce qu'on ajoute à l'alliage métaux de terres rares-métaux de transition de la couche d'enregistrement du chrome à raison de 3,0 à 8,0 pourcent atomique, par rapport à l'alliage total, du platine à raison de 0,7 à 5, en particulier de 1 à 3% atomique, ou du sélénium à raison de 1 à 10% atomique.

17. Milieu d'enregistrement magnéto-optique selon la revendication 1, caractérisé en ce que la couche d'enregistrement (4) magnéto-optique est située entre les deux couches diélectriques (3,5) en SiNₓ, SiON, SiAlON, AlN, AlON, Ta₂O₅, TaOₓ ou NbOₓ avec 0,9 ≤ x ≤ 1,4 pour SiNₓ et 1 ≤ x ≤ 2 pour TaOₓ et NbOₓ.

18. Milieu d'enregistrement magnéto-optique selon la revendication 17, caractérisé en ce l'épaisseur de la première couche diélectrique (3) entre le substrat (2) et la couche d'enregistrement (4) magnéto-optique est de 30 à 140 nm et l'indice de réfraction n vaut de 1,9 à 2,2.

19. Milieu d'enregistrement magnéto-optique selon la revendication 18, caractérisé en ce que l'épaisseur de la couche diélectrique (3) est de 50 à 80 nm et l'indice de réfraction n vaut de 2,0 à 2,1.

20. Milieu d'enregistrement magnéto-optique selon la revendication 17, caractérisé en ce que l'épaisseur de la deuxième couche diélectrique (5), qui est placée entre la couche d'enregistrement (4) magnéto-optique et la couche réfléchissante (6), est de 10 à 60 nm et l'indice de réfraction n vaut de 1,9 à 2,2.

21. Milieu d'enregistrement magnéto-optique selon la revendication 20, caractérisé en ce que l'épaisseur de la deuxième couche diélectrique (5) est de 25 à 40 nm et l'indice de réfraction nvaut de 2,0 à 2,1.

22. Milieu d'enregistrement magnéto-optique selon la revendication 8, caractérisé en ce que la deuxième couche diélectrique (5) est en nitrure d'aluminium, avec une épaisseur de 20 à 50 nm.

23. Milieu d'enregistrement magnéto-optique selon une ou plusieurs des revendications 1 à 8, caractérisé en ce que la couche réfléchissante (6) est un métal du groupe Al, Cu, Ag, Au et son épaisseur est située dans la gamme de 20 jusqu'à 80 nm.

24. Milieu d'enregistrement magnéto-optique selon la revendication 23, caractérisé en ce que la couche réfléchissante (6) est constituée d'aluminium avec un ajout d'un métal du groupe Zr, Ta, Ti, Cr.

25. Milieu d'enregistrement magnéto-optique selon la revendication 24, caractérisé en ce que les deux métaux de la couche réfléchissante (6) présentent perpendiculairement à sa surface un gradient de concentration.

26. Milieu d'enregistrement magnéto-optique selon une ou plusieurs des revendications 1 à 25, caractérisé en ce que le milieu d'enregistrement (8) est muni sur la face recto et sur la face verso d'une couche de vernis de protection (7, 1).
